**Europäisches Patentamt**

(19) **European Patent Office**

**Office européen des brevets**

(11) Numéro de publication: **0 060 751 B1**

(12) **FASCICULE DE BREVET EUROPEEN**

(45) Date de publication du fascicule du brevet:
16.10.85

(51) Int. Cl.⁴: **H 04 B 1/74**, H 04 L 1/02

(21) Numéro de dépôt: **82400357.8**

(22) Date de dépôt: **02.03.82**

(54) Dispositif de commutation de voies de transmission de données.

(30) Priorité: **13.03.81 FR 8105127**

(43) Date de publication de la demande:
**22.09.82 Bulletin 82/38**

(45) Mention de la délivrance du brevet:
**16.10.85 Bulletin 85/42**

(84) Etats contractants désignés:
**DE GB NL**

(56) Documents cités:
**DE - B - 2 851 168**
**FR - A - 2 445 669**
**FR - A - 2 462 065**

(73) Titulaire: **THOMSON-CSF, 173, Boulevard Haussmann, F-75379 Paris Cedex 08 (FR)**

(72) Inventeur: **Blanc, Christian, THOMSON-CSF SCPI 173, bld Haussmann, F-75360 Paris Cedex 08 (FR)**
Inventeur: **Gomez, Rémy, THOMSON-CSF SCPI 173, bld Haussmann, F-75360 Paris Cedex 08 (FR)**

(74) Mandataire: **Weinmiller, Jürgen et al, Zeppelinstrasse 63, D-8000 München 80 (DE)**

## Description

La présente invention concerne la transmission de données et plus particulièrement un dispositif de commutation de voies de transmission de données.

L'invention s'applique au cas où des données sont à transmettre, d'un équipement émetteur vers un équipement récepteur, alternativement au moyen d'une première et d'une seconde voies de transmission de données, et notamment au cas où l'une des voies, dite voie normale, est destinée à acheminer normalement les données, l'autre voie, dite voie de secours, étant destinée à acheminer les données lorsque la voie normale est défaillante.

L'invention s'applique notamment à la transmission de données par faisceaux hertziens. Les faisceaux hertziens comportent en effet, entre deux localités à desservir, plusieurs voies de transmission de données en parallèle (généralement sept) sur lesquelles sont reparties les données à transmettre, auxquelles est ajoutée une voie supplémentaire de secours utilisable pour l'une quelconque de ces sept voies lorsque sa qualité devient insuffisante.

Un problème technique se pose du fait que les deux voies de transmission ont des conditions de propagation différentes. Bien que les données transmises sur ces deux voies soient identiques, ceci se traduit par une perte de synchronisme des données et par un déphasage des signaux d'horloge associés aux données.

Ce problème se pose avec d'autant plus d'acuité que le débit binaire des voies de transmission de données est élevé. En effet plus le débit binaire est élevé, plus la différence de temps de propagation entre les voies se traduit par un nombre d'éléments binaires élevé, c'est-à-dire par une perte de synchronisme importante. En revanche, si le débit binaire est suffisamment faible, aucune perte de synchronisme ne se produit.

Or, pour ne pas altérer la transmission des données, il faut que ces phénomènes soient insensibles pour l'équipement récepteur lors de l'opération de commutation.

Pour ce faire, un dispositif de commutation a été proposé dans la demande de brevet N° 7 919 082 déposée le 24 juillet 1979 par la demanderesse (N° de publication 2 462 065). Ce dispositif de commutation comporte des moyens pour mettre progressivement en phase, avant l'opération de commutation, le signal d'horloge associé à la voie précédemment en service, dite ancienne voie, et le signal d'horloge associé à la voie nouvellement mise en service, dite nouvelle voie, et des moyens pour mettre en synchronisme, avant l'opération de commutation, les données transmises sur l'ancienne et la nouvelle voie.

Ces moyens de mise en synchronisme comportent une mémoire-tampon associée à chacune des voies, un détecteur de coïncidence entre les données stockées dans ces deux mémoires-tampon, un circuit permettant de décentrer avant l'opération de commutation et en cas de détection de non-coïncidence, les données stockées dans la mémoire-tampon associée à la nouvelle voie, et ce jusqu'à détection de coïncidence, et un circuit permettant de recentrer après l'opération de commutation les données stockées dans la mémoire tampon associée à la nouvelle voie, de manière à rendre possible un nouveau décentrage lors d'une nouvelle opération de commutation dans le même sens qui pourrait se présenter ultérieurement.

La mise en synchronisme des données, solution vers laquelle on est naturellement conduit lorsqu'on examine le problème, requiert donc un matériel fort complexe et ne remplit pas parfaitement l'objectif que l'on s'est fixé, à savoir une insensibilité de l'équipement récepteur aux phénomènes accompagnent la commutation, ceci en raison des diverses manipulations que l'on fait subir aux données stockées dans la mémoire tampon associée à la nouvelle voie (la sortie de cette mémoire tampon étant directement reliée, après commutation, à l'équipement récepteur).

Une autre approche de résolution de ce problème est décrite dans la demande de brevet français 2 445 669 qui concerne un dispositif de commutation de voies de transmission de données interposé entre un équipement récepteur et deux voies de transmissions de données transmettant chacune selon des conditions de propagation différentes. Des mémoires tampons au nombre de trois par voie sont prévues pour mémoriser les données reçues de chacune des voies. Des unités de réception disposées sur chacune des voies élaborent des signaux d'horloge de référence à partir des données transmises sur chacune des voies qui déterminent des cycles d'écriture des données reçues dans chacune des mémoires tampons. Les cycles d'écriture dans les mémoires tampon sont entrelacés et ont pour chaque mémoire tampon une durée égale à 3 fois la période du signal d'horloge de référence. Une boucle à verrouillage de phase est asservie sur l'écart de phase moyen existant entre les signaux d'horloge de référence fournis par les unités de réception pour délivrer des impulsions d'horloge de lecture à la fréquence de référence des mémoires tampons de chacune des voies. Les données lues dans les mémoires tampons de chacune des voies sont appliquées aux entrées d'un circuit de sélection de voie qui sélectionne les données de la voie de transmission la moins perturbée.

Cette solution qui ne nécessite plus la mise en synchronisme des données reçues sur les deux voies de transmission n'est toutefois pas applicable aux faisceaux hertziens dans lesquels la transmission des données sur les voies de transmission est effectuée selon le mode à horloge séparée, c'est-à-dire où les signaux d'horloge et les données sont transmises sur des voies différentes car dans ce cas l'asservissement de la boucle à verrouillage sur la moyenne de phase des signaux d'horloge transmis sur les deux voies ne permet pas d'obtenir des signaux d'horloge rigoureusement en phase avec les signaux d'horloge de la voie commutée.

La présente invention a pour objet un dispositif de commutation ne nécessitant pas de mise en synchronisme des données, tout en permettant d'améliorer l'insensibilité de l'équipement récepteur à l'opération de commutation, et en présentant une structure simplifiée.

A cet effet, l'invention a pour objet un dispositif de commutation de voies de transmission de données, interposé entre un équipement récepteur et deux voies de transmission de données transmettant chacune selon des conditions de propagation différentes, les données émises par un même équipement émetteur et le signal d'horloge associé à ces données, le dispositif étant du type comprenant des premiers moyens pour allonger dans un rapport n, la durée des données transmises sur les deux voies de transmission et des deuxièmes moyens de commutation pour transmettre à l'équipement récepteur des données reçues de l'une ou l'autre des deux voies caractérisé en ce qu'il comprend également des troisièmes moyens pour fournir un signal d'horloge à destination de l'équipement récepteur en phase avec le signal d'horloge de la voie qui est commutée, des quatrièmes moyens couplés aux premiers moyens pour mettre en synchronisme les données des deux voies dont les durées sont allongées par les premiers moyens, des cinquièmes moyens couplés à l'équipement récepteur pour raccourcir dans le même rapport n la durée des données fournie par les premiers moyens et transmettre les données ainsi obtenues à destination de l'équipement récepteur en synchronisme avec les signaux d'horloge fournis par les troisièmes moyens, les deuxièmes moyens de commutation étant interposés entre les premiers et cinquièmes moyens pour transmettre vers l'équipement récepteur les données mises en synchronisme par les quatrièmes moyens au travers des cinquièmes moyens, la durée allongée des données fournies par les premiers moyens étant supérieure à deux fois la différence maximale de propagation entre les deux voies.

Les objets et caractéristiques de la présente invention apparaîtront plus clairement à la lecture de la description suivante d'un exemple de réalisation, ladite description étant faite en relation avec les dessins ci-annexés dans lesquels:
 – la figure 1 est un schéma synoptique d'un dispositif de commutation conforme à l'invention;
 – la figure 2 est un schéma détaillé d'un dispositif de commutation conforme à l'invention.

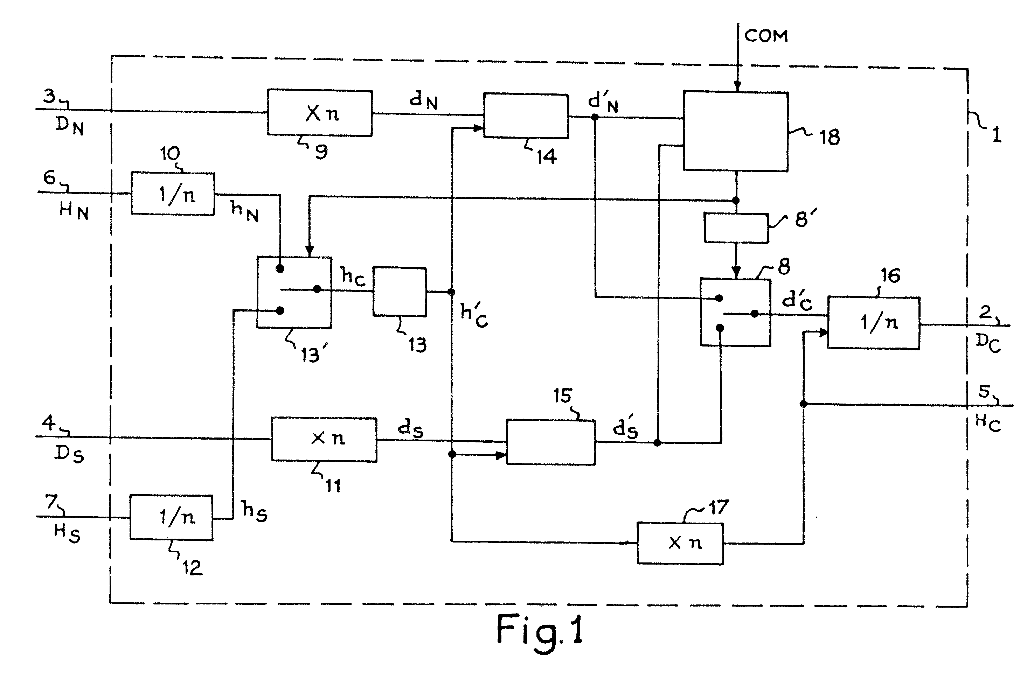

Le dispositif de commutation 1 représenté sur la figure 1 est interposé entre d'une part, un équipement récepteur (non représenté), auquel il fournit des données commutées $D_C$ sur une voie de transmission 2 dite voie aval, d'autre part une voie de transmission normale 3 et une voie de transmission de secours 4. Sur les voies normales et de secours sont transmises respectivement des données normales $D_N$ et de secours $D_S$, qui sont les données émises par un même équipement émetteur (non représenté), mais ayant subi des conditions de propagation différentes sur ces deux voies.

La transmission des données sur les voies de transmission 2, 3 et 4 se fait selon le mode horloge séparée, c'est-à-dire que des signaux d'horloge $H_C$, $H_N$ et $H_S$ respectivement associés aux données $D_C$, $D_N$ et $D_S$ sont transmis simultanément à ces données sur des voies de transmission 5, 6 et 7 respectivement associées aux voies de transmission 2, 3 et 4.

Le dispositif de commutation 1 assure, dans un état normal, c'est-à-dire en l'absence de défaillance de la voie normale 3, la connexion des voies 2 et 3 ainsi que la connexion des voies 5 et 6, et, dans un état de secours, c'est-à-dire en présence d'une défaillance de la voie normale 3, la connexion des voies 2 et 4 ainsi que la connexion des voies 5 et 7.

Le passage de l'état normal à l'état de secours, et réciproquement de l'état de secours à l'état normal lorsque la défaillance cesse, est commandé par un ordre de commutation COM fourni par un dispositif (non représenté) chargé de surveiller en permanence la qualité de la transmission sur la voie normale 3 et d'en tirer des conséquences sur la nécessité d'effectuer de telles commutations. Ce dispositif ne fait pas l'objet de l'invention et ne sera donc pas décrit de manière plus détaillée.

Le dispositif de commutation 1 comporte un commutateur 8 apte à assurer une connexion de la voie aval 2 soit à la voie normale 3 soit à la voie de secours 4, suivant l'ordre de commutation reçu.

Le dispositif de commutation 1 comporte, en amont du commutateur 8, des moyens 9 pour allonger dans un rapport n la durée des données transmises sur la voie normale 3 et des moyens 10 pour réduire dans le même rapport n la fréquence du signal d'horloge associé aux données transmises sur la voie normale.

De la même façon le dispositif de commutation 1 comporte en amont du commutateur 8 des moyens 11 pour allonger dans le rapport n la durée des données transmises sur la voie de secours 4, et des moyens 12 pour réduire dans le même rapport n la fréquence du signal d'horloge associé aux données transmises sur la voie de secours.

Le dispositif de commutation 1 comporte également en amont du commutateur 8 des moyens 13 de mise en phase des signaux d'horloge fictifs $h_N$ et $h_S$ fournis respectivement par les moyens 10 et 12. Les moyens 13 sont destinés à assurer soit le calage de la phase du signal d'horloge fictif remis en phase par les moyens 13, $h'_C$, sur la phase du signal $h_S$, soit le calage de la phase du signal $h'_C$ sur la phase du signal $h_N$, suivant la position d'un commutateur 13' interposé entre d'une part les moyens 10 et 12, d'autre part les moyens 13. Le commutateur 13' est commandé comme le commutateur 8, à la différence près que la commande du commutateur 8 est retardée par rapport à la commande du commutateur 13' au moyen d'un circuit de temporisation 8'.

Le dispositif de commutation 1 comporte également, en amont du commutateur 8, des moyens 14 pour assurer une prise en compte des données fictives $d_N$ fournies par les moyens 9, ainsi que des moyens 15 pour assurer une prise en compte des données fictives $d_S$ fournies par les moyens 11, par le signal d'horloge fictif remis en phase $h'_C$ fourni par les moyens 13.

Le dispositif de commutation 1 comporte, en aval du commutateur 8, des moyens 16 pour raccourcir dans le même rapport n, la durée des données fictives commutées $d'_C$ obtenues en sortie du commutateur 8, et égales soit aux données fictives $d'_N$ fournies par les moyens 14, soit aux données fictives $d'_S$ fournies par les moyens 15, suivant la position du commutateur 8. Les moyens 16 fournissent les données commutées à la voie aval 2.

Le dispositif de commutation 1 comporte également en aval du commutateur 8 des moyens 17 pour accroître dans le même rapport n la fréquence du signal d'horloge fictif commuté $h'_C$ fourni par les moyens 13, les moyens 17 fournissent le signal d'horloge réel commuté $H_C$ à la voie 5.

Dans la pratique, pour des raisons d'économie de matériel liées à des observations statistiques des défaillances des voies de transmission, une seule voie de secours est généralement affectée à plusieurs voies normales transportant des données différentes. Dans ces conditions, on est conduit à rajouter au dispositif de commutation 1, en amont du commutateur 8, des moyens 18 de mise en synchronisme des données fictives $d'_N$ et $d'_S$. La commutation n'est alors effectuée au moyen du commutateur 8 que lorsque les données fictives $d'_N$ et $d'_S$ ont été remises en synchronisme par les moyens 18. Les moyens 18 seraient inutiles si une voie de secours était affectée de manière fixe à chaque voie normale.

Du fait que la commutation des données se fait sur les données fictives, c'est-à-dire dont la durée est multipliée par n, et non sur les données réelles, le dispositif de commutation selon l'invention ne nécessite aucune mise en synchronisme des données réelles. En effet, à condition que les différences de condition de propagation entre les voies normales et de secours ne se traduisent pas par une perte de synchronisme recouvrant plus de $\frac{n}{2}$ éléments binaires, la commutation à l'aide du commutateur 8 se fait alors que le même élément binaire fictif est présent sur les voies à commuter.

Les performances du dispositif de commutation conforme à l'invention sont encore accrues du fait que la commutation des signaux d'horloge se fait sur les signaux d'horloge fictifs, c'est-à-dire dont la fréquence est divisée par n, et non sur les signaux d'horloge réels. En effet quels que soient les moyens utilisés pour assurer un calage progressif de la phase d'un signal d'horloge sur la phase d'un autre signal d'horloge de même fréquence F, il est techniquement impossible d'effectuer un saut de phase supérieur à $\pi$. Or si ces moyens opèrent, comme le font les moyens 13, sur de signaux d'horloge dont la fréquence est divisée par n, il est possible de rattraper progressivement un écart allant jusqu'à $\pi$ entre les signaux d'horloge fictifs de fréquence $\frac{F}{n}$. Il devient alors possible de rattraper progressivement un écart allant jusqu'à $n\pi$ entre les signaux d'horloge réels, de fréquence F. Grâce à l'invention, il devient donc possible de compenser l'écart exact existant entre les signaux d'horloge associés à l'ancienne et à la nouvelle voie, et non plus seulement de compenser cet écart modulo $2\pi$, c'est-à-dire à l'intérieur d'un seul élément binaire. Ceci n'est possible évidemment qu'à la condition que le déphasage entre ces deux signaux d'horloge ne soit pas supérieur à $n\pi$.

L'invention permet donc de résoudre de manière extrêmement simple les problèmes posés par la commutation de voies de transmission.

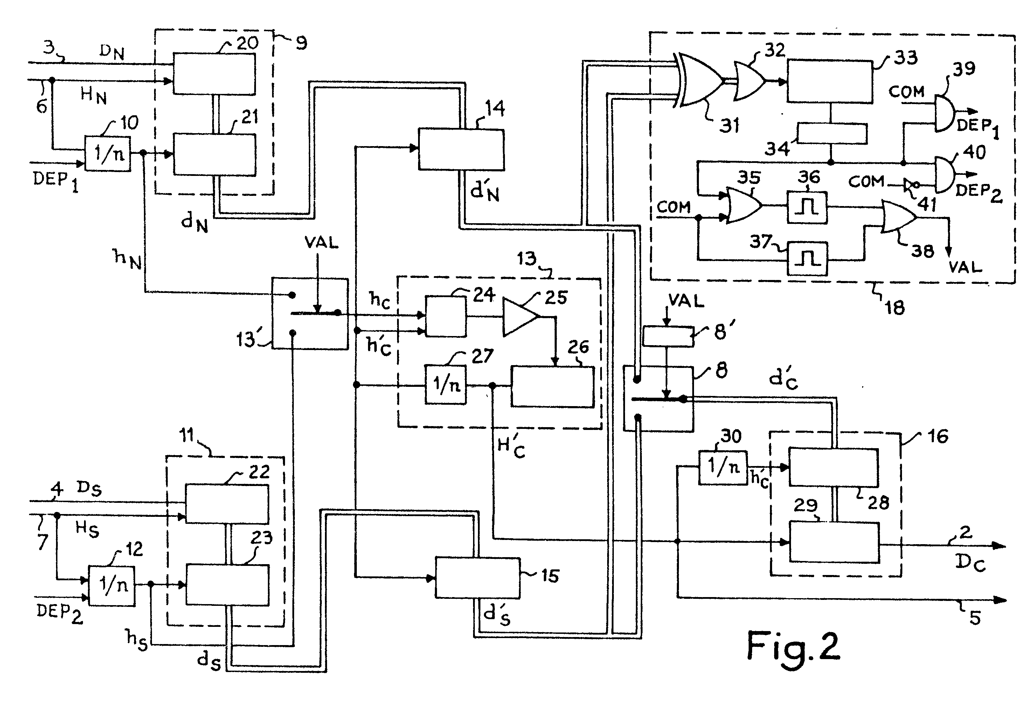

Sur la figure 2 on a représenté de manière détaillée les différents moyens représentés sur la figure 1.

Les moyens 9 pour allonger fictivement dans un rapport n la durée des données normales $D_N$ consistent en un convertisseur série-parallèle. Ce convertisseur série parallèle comporte un registre série-parallèle 20, de n éléments binaires, dont l'entrée série est reliée à la voie 3 et dont l'entrée d'horloge est reliée à la voie 6. Ce convertisseur série-parallèle comporte également un registre parallèle-parallèle 21, de n éléments binaires, dont les entrées parallèle sont reliées aux sorties parallèle du registre 20.

Les moyens 10 pour réduire fictivement dans le rapport n la fréquence du signal d'horloge $H_N$ associé aux données normales $D_N$ consistent en un diviseur par n dont l'entrée est reliée à la voie 6 et dont la sortie est reliée à l'entrée d'horloge du registre parallèle-parallèle 21.

Les moyens 11 pour allonger fictivement dans un rapport n la durée des données de service $D_S$ consistent également en un convertisseur série-parallèle. Ce convertisseur série-parallèle comporte un registre série-parallèle 22, de n éléments binaires, dont l'entrée série est reliée à la voie 4 et dont l'entrée d'horloge est reliée à la voie 7. Ce convertisseur série-parallèle comporte également un registre parallèle-parallèle 23 de n éléments binaires dont les entrées parallèle sont reliées aux sorties du registre 22.

Les moyens 12 pour réduire fictivement dans un rapport n la fréquence du signal d'horloge $H_S$ consistent en un diviseur par n dont l'entrée est reliée à la voie 7 et dont la sortie est reliée à l'entrée d'horloge du registre parallèle-parallèle 23.

Les moyens 13 de mise en phase des signaux d'horloge fictifs $h_n$ et $h_s$ consistent en une boucle à verrouillage de phase. Cette boucle à verrouillage de phase comporte en série un comparateur de phase 24 dont une première entrée constitue l'entrée de la boucle à verrouillage de phase, un amplificateur 25, un oscillateur 26 conmandé en tension et fonctionnant à la fréquence des signaux d'horloge réels $H_N$ et $H_S$, et un diviseur par n, 27, dont la sortie est reliée à une seconde entrée du comparateur de phase 24. L'entrée de la boucle à verrouillage de phase est reliée à la sortie du commutateur 13', dont les entrées sont respectivement reliées aux sorties des diviseurs 10 et 12. La commande du commutateur 13' sera décrite ultérieurement.

Les moyens 14 pour assurer une prise en compte des données fictives $d_N$ par l'horloge fictive remise en phase $h'_C$ consistent en un registre parallèle-parallèle, de n éléments binaires, dont les entrées parallèle sont reliées aux sorties du registre 21, et dont l'entrée d'horloge est reliée à la sortie du diviseur 27.

De même les moyens 15 pour assurer une prise en compte des données fictives $d_S$ par l'horloge fictive remise en phase $h'_C$ consistent en un registre parallèle-parallèle, de n éléments binaires, dont les entrées parallèle sont reliées aux sorties du registre 23, et dont l'entrée d'horloge est reliée à la sortie du diviseur 27.

Le commutateur 8, représenté très schématiquement sur cette figure, est en fait constitué de n commutateurs munis chacun de deux entrées reliées respectivement à la sortie de même rang des registres 14 et 15. La commande de ces commutateurs sera décrite ultérieurement.

Les moyens 16 pour raccourcir, dans le rapport n, la durée des données fictives commutées et remises en phase $d'_C$ consistent en un convertisseur parallèle-série. Ce convertisseur parallèle-série comporte un registre parallèle-parallèle 28, de n éléments binaires, dont les entrées parallèle sont reliées aux sorties des n commutateurs formant le commutateur 8, et un registre parallèle-série 29 dont les entrées parallèle sont reliées aux sorties du registre 28, et dont la sortie série est reliée à la voie aval 2. L'entrée d'horloge du registre 29 est reliée à la sortie de l'oscillateur commandé en tension 26 qui lui fournit un signal d'horloge réel remis en phase $H'_C$. L'entrée d'horloge du registre 28 est reliée à la sortie d'un diviseur par n, 30, dont l'entrée est reliée à la sortie de l'oscillateur 26. Dans la pratique, les diviseurs 27 et 30 sont confondus.

Les moyens 17 pour accroître dans le rapport n la fréquence du signal d'horloge fictif, représentés sur la figure 1, et utiles pour la présentation du principe de l'invention ne se retrouvent pas à l'identique sur la figure 2, en raison des limites imposées par la technologie. Sur la figure 2, les moyens 17 se retrouvent d'une part dans le fait que l'oscillateur commandé en tension 26 fonctionne à la fréquence des signaux d'horloge réels (c'est-à-dire de fréquence non divisée par n), et d'autre part dans l'introduction d'un diviseur par n, 27, à la suite de l'oscillateur 26 dans la boucle à verrouillage de phase. Ceci permet d'obtenir le signal d'horloge réel remis en phase, tout en évitant les difficultés technologiques liées à la réalisation de multiplieurs de fréquence. En effet, il suffit alors d'introduire en aval du commutateur 8 un diviseur de fréquence, ce qui est beaucoup plus facilement réalisable en pratique que l'introduction d'un multiplieur de fréquence.

Les moyens 18 de mise en synchronisme des données fictives comportent un ensemble 31 de n portes «OU exclusif», représentées très schématiquement sur le dessin à l'aide d'une seule porte «OU exclusif», et munies chacune de deux entrées reliées aux sorties de même rang des registres 14 et 15. Les sorties de ces n portes «OU exclusif» sont reliées aux entrées d'une première porte «OU» 32.

Les moyens 18 comportent également un compteur 33 dont l'entrée d'horloge est reliée à la sortie de la porte «OU» 32, et un décodeur 34 de la valeur m relié à la sortie du compteur 33, m étant défini ultérieurement.

Les moyens 18 comportent également une deuxième porte «OU» 35 munie d'une première entrée reliée à la sortie du décodeur 34 et d'une seconde entrée qui reçoit l'ordre de commutation COM. Les moyens 18 comportent également un premier monostable 36 dont l'entrée est reliée à la sortie de la porte «OU» 35, et un second monostable 37 dont l'entrée reçoit l'ordre de commutation COM. Les moyens 18 comportent également une troisième porte «OU» 38 munie de deux entrées reliées respectivement à la sortie des monostables 36 et 37, et d'une sortie reliée à l'entrée de commande du commutateur 13' et du circuit de temporisation 8' et fournissant un signal de validation de commutation VAL. Le circuit de temporisation 8' consiste par exemple en un monostable. Les moyens 18 comportent également une première porte «ET» 39 munie d'une première entrée qui reçoit l'ordre de commutation COM, d'une seconde entrée reliée à la sortie du décodeur 34, et d'une sortie fournissant un premier signal de commande de déphasage $DEP_1$. Les moyens 18 comportent enfin une deuxième porte «ET» 40 munie d'une première entrée qui reçoit l'ordre de commutation COM via un inverseur 41, d'une seconde entrée reliée à la sortie du décodeur 34, et d'une sortie qui fournit un second signal de commande de déphasage $DEP_2$.

Le premier et le second signal de commande de déphasage alimentent respectivement l'entrée de commande de déphasage des diviseurs 10 et 12, une commande de déphasage de ces diviseurs se traduisant par un déphasage élémentaire de $\dfrac{2\pi}{n}$ sur les signaux d'horloge fictifs fournis par ces diviseurs.

Le dispositif de commutation représenté sur la figure 2 fonctionne de la façon suivante.

Les données $D_N$ reçues sur la voie 3 sont dans un premier temps inscrites à la fréquence F dans le registre série-parallèle 20 (F désignant la fréquence des signaux d'horloge réels $H_N$ et $H_S$). Ces données $D_N$ sont dans un second temps inscrites dans le registre parallèle-parallèle 21 à la fréquence $\dfrac{F}{n}$, élaborée par le diviseur 10 à partir de la fréquence F. Il en est de même pour l'inscription des données $D_S$, reçues sur la voie 4, dans les registres 22 et 23.

En raison des différences de condition de propagation existant entre les deux chemins empruntés par les données émises par le même équipement émetteur, les registres 20 et 22 ne présentent pas simultanément le même contenu.

En revanche, les registres 21 et 23, dont le contenu ne change qu'à la fréquence $\frac{F}{n}$, présentent simultanément le même contenu, à condition toutefois que les données fictives $D_N$ et $D_S$ aient subi une mise en synchronisme préalable. Cette mise en synchronisme préalable, nécessaire lors de chaque opération de commutation lorsqu'une seule voie de secours est affectée à plusieurs voies normales, n'est toutefois utile qu'à l'initialisation du système lorsque la même voie de secours est constamment affectée à la même voie normale. Cette mise en synchronisme préalable des données fictives est assurée par les moyens 18 dont le fonctionnement sera décrit ultérieurement.

Les commutateurs 8 et 13′ sont commandés soit par l'ordre de commutation COM à travers les moyens 18, soit directement par l'ordre de commutation COM, suivant que la mise en synchronisme préalable des données fictives s'avère ou non nécessaire.

On se place maintenant dans le cas où les données fictives sont rendues synchrones, c'est-à-dire dans le cas où le contenu des registres 21 et 23 est identique. Lorsqu'intervient alors la commande du commutateur 13′, le signal $h_c$ d'entrée de la boucle à verrouillage de phase passe brusquement de la phase du signal d'horloge fictif avant commutation à la phase du signal d'horloge fictif après commutation. En revanche, ce passage se fait de manière très progressive sur le signal d'horloge fictif $h'_c$ obtenu en sortie de la boucle à verrouillage de phase. Or les données fictives $d_N$ et $d_S$ sont inscrites dans les registres 14 et 15 sur les fronts actifs du signal $h'_c$ de sortie de la boucle à verrouillage de phase. Par conséquent la prise en compte de ces données dans les registres 14 et 15 varie progressivement dans le temps, ce qui correspond pour la nouvelle voie à une prise en compte des données par un signal d'horloge qui se rapproche progressivement du signal d'horloge associé à la nouvelle voie, et pour l'ancienne voie à une prise en compte des données par un signal d'horloge qui s'éloigne progressivement du signal d'horloge associé à l'ancienne voie. Pour que la commutation des données se fasse dans les meilleures conditions, du point de vue de l'équipement récepteur, on observe qu'il convient de commander le commutateur 8 approximativement au milieu de la durée d'intrégration de la boucle à verrouillage de phase. Le circuit de temporisation 8′ est donc choisi en fonction de ces considérations.

Ainsi les données inscrites dans le registre 28 sont dans un premier temps (avant l'ordre de commutation du commutateur 8) les données de l'ancienne voie, et ces données sont prises en compte par le signal d'horloge fictif remis en phase $h'_c$ élaboré par la boucle à verrouillage de phase pendant ce premier temps. Et dans un deuxième temps (après l'ordre de commutation du commutateur 8) les données inscrites dans le registre 28 sont les données de la nouvelle voie, prises en compte par le signal $h'_c$ élaboré par la boucle à verrouillage de phase pendant ce deuxième temps. Le passage parallèle série de ces données, c'est-à-dire leur transformation en données réelles, est assuré par le registre 29.

On décrit maintenant le fonctionnement des moyens 18 de mise en synchronisme des données fictives $d_N$ et $d_S$ stockées dans les registres 21 et 23. Le processus de mise en synchronisme débute par une comparaison des données stockées dans les registres 14 et 15, au moyen de l'ensemble 31 de portes «OU exclusif». Si le contenu du registre 14 est identique au contenu du registre 15, le signal de sortie de la porte «ET» 32 prend un premier niveau logique; sinon, il prend un second niveau logique.

On utilise un compteur 33 dont l'entrée d'horloge est sensible aux passages du premier au second niveau logique du signal qui lui est appliqué, pour compter le nombre de fois où l'on détecte une différence entre les contenus de ces deux registres pendant une certaine durée $T_1$ comptée soit à partir du moment où l'ordre de commutation devient actif, soit à partir du moment où le résultat du comptage devient égal à un certain nombre m. Ceci est obtenu par l'utilisation du monostable 36 de durée égale à la durée $T_1$, déclenché par le signal de sortie de la porte «OU» 35 dont une première entrée reçoit l'ordre de commutation COM et dont une deuxième entrée est reliée à la sortie du décodeur 34 de la valeur m du compteur 33.

Si le compteur 33 atteint la valeur m avant la fin de la durée $T_1$, le signal VAL est maintenu à un niveau logique tel que ni le commutateur 13′ ni le circuit de temporisation 8′ ne sont activés.

De plus, à chaque fois que le compteur 33 atteint la valeur m avant la fin de la durée $T_1$, une commande de déphasage est appliquée à l'entrée de commande de déphasage de l'un des compteurs 10 et 12. Chaque commande de déphasage de l'un de ces compteurs a pour effet de décaler d'un élément binaire le contenu du registre (21 ou 23) associé à ce compteur. Grâce à la présence des portes «ET» 39 et 40 et de l'inverseur 41, la commande de déphasage est appliquée au compteur associé à la nouvelle voie, c'est-à-dire à la voie qui sera mise en service après commutation. On suppose en effet que l'ordre de commutation prend un premier niveau logique lorsqu'une défaillance est observée sur la voie normale et un second niveau logique lorsque l'arrêt de cette défaillance est observé sur la voie normale.

En revanche, si le compteur 33 n'atteint pas la valeur m avant la fin de la durée $T_1$ ou à défaut, si à la fin d'une durée $T_2$ très supérieure à $T_1$ le compteur 33 a toujours atteint la valeur m avant la fin de chaque durée $T_1$, le signal VAL prend un niveau logique tel que le commutateur 13′ et le circuit de temporisation 8′ sont activés. Ceci est obtenu par l'utilisation de la porte «OU» 38 et du monostable 37 de durée égale à la durée $T_2$.

Le choix de ce processus de mise en synchronisme, faisant appel à plusieurs tests successifs de coïncidence entre les contenus des registres 14 et 15 pendant une durée égale à $T_1$ est destiné à s'affranchir des phénomènes suivants: données pauvres en informations (séquences 111111--, 000000--) et données ayant une périodicité inférieure à n (séquences 101010---11001100----). Dans ces cas en effet le contenu des registres ne peut à lui seul lever le doute. Le seul moyen de s'en affranchir est alors de tirer parti de la présence dans les données transmises de mots de synchronisation qui se répètent avec une périodicité égale à $T_1$ ou sous multiple de $T_1$.

Comme par ailleurs on souhaite que la mise en synchronisme des données fictives se déroule le plus rapidement possible, le choix entre les valeurs m, $T_1$ et $T_2$ est finalement l'affaire d'un compromis entre rapidité et qualité de la mise en synchronisme souhaitées.

**Revendications**

1. Dispositif de commutation de voies de transmission de données, interposé entre un équipement récepteur et deux voies de transmission de données (3 et 4) transmettant chacune selon des conditions de propagation différentes, les données émises par un même équipement émetteur et le signal d'horloge associé à ces données, le dispositif étant du type comprenant des premiers moyens (9 et 11) pour allonger dans un rapport n, la durée des données transmises sur les deux voies de transmission, et des deuxièmes moyens de commutation (8) pour transmettre à l'équipement récepteur les données reçues de l'une ou l'autre des deux voies caractérisé en ce qu'il comprend également des troisièmes moyens (13, 17) pour fournir un signal d'horloge à destination de l'équipement récepteur en phase avec le signal d'horloge de la voie qui est commutée, des quatrièmes moyens (18) couplés aux premiers moyens (9, 11) pour mettre en synchronisme les données des deux voies dont les durées sont allongées par les premiers moyens, des cinquièmes moyens (16) couplés à l'équipement récepteur pour raccourcir dans le même rapport n la durée des données fournie par les premiers moyens et transmettre les données ainsi obtenues à destination de l'équipement récepteur en synchronisme avec les signaux d'horloge fournis par les troisièmes moyens (13, 17), les deuxièmes moyens de commutation (8) étant interposés entre les premiers (9, 11) et cinquièmes moyens (16) pour transmettre vers l'équipement récepteur les données mises en synchronisme par les quatrièmes moyens (18) au travers des cinquièmes moyens, la durée allongée des données fournies par les premiers moyens (9, 11) étant supérieure à deux fois la différence maximale de propagation entre les deux voies.

2. Dispositif selon la revendication 1, caractérisé en ce que les premiers moyens (9) pour allonger, dans le rapport n, la durée des données transmises sur une première voie de transmission consistent en un premier convertisseur série-parallèle (20 et 21) muni d'une entrée série reliée à la première voie de transmission et de n sorties parallèle reliées aux premières entrées de n commutateurs (8).

3. Dispositif selon les revendications 1 et 2, caractérisé en ce que les premiers moyens (11) pour allonger dans le rapport n, la durée des données transmises sur une seconde voie de transmission consistent en un second convertisseur série-parallèle (22 et 23) muni d'une entrée série reliée à la seconde voie de transmission et de n sorties parallèle reliées aux secondes entrées des n commutateurs (8).

4. Dispositif selon les revendications 1, 2 et 3, caractérisé en ce que les cinquièmes moyens (16) pour raccourcir la durée des données transmises vers l'équipement récepteur consistent en un convertisseur parallèle-série (28 et 29) muni de n entrées parallèle reliées aux sorties des n commutateurs et d'une sortie série reliée à l'équipement récepteur.

5. Dispositif selon les revendications 1 à 4, caractérisé en ce que les troisièmes moyens (13, 17) pour fournir un signal d'horloge à destination de l'équipement récepteur en phase avec le signal d'horloge de la voie qui est commutée sont constitués par une boucle à verrouillage de phase (24, 25, 26, 27) dont l'entrée est reliée à la sortie d'un commutateur (13') de signaux d'horloge, les entrées du commutateur (13') de signaux d'horloge étant reliées respectivement à un diviseur par n (10, 12) des impulsions du signal d'horloge de chacune des voies.

6. Dispositif selon l'une quelconque des revendications 1 à 5, caractérisé en ce qu'il comporte un circuit de temporisation (8') pour retarder la commutation des données effectuée par les deuxièmes moyens de commutation (8) de la durée nécessaire à la mise en phase du signal d'horloge fourni par la boucle à verrouillage de phase avec le signal d'horloge de la voie commutée.

7. Dispositif selon l'une quelconque des revendications 1 à 6, caractérisé en ce qu'il comporte des septièmes moyens (14, 15) pour prendre en compte les données de durée allongée par les premiers moyens (9, 11) en synchronisme avec le signal d'horloge formé par la boucle à verrouillage de phase (13).

8. Dispositif selon la revendication 7, caractérisé en ce que les septièmes moyens (14 et 15) pour prendre en compte les données fictives de durée rallongée par les premiers moyens (9, 11) par le signal d'horloge fourni par la boucle à verrouillage de phase (3) consistent en deux registres parallèle-parallèle (14 et 15) de n éléments binaires, interposés entre les deux convertisseurs série-parallèle (9 et 11) et les n commutateurs (8), et munis d'entrées d'horloge reliées à la sortie des moyens (13) de mise en phase des signaux d'horloge.

9. Dispositif selon la revendication 8, caractérisé en ce que les quatrièmes moyens (18) de mise en synchronisme des données fictives comportent un circuit de commande de décalage des données stockées dans le convertisseur série-parallèle associé à l'ancienne voie, en cas de détection de non coïncidence entre les contenus des deux registres parallèle-parallèle (14 et 15), et un circuit de commande du circuit de temporisation (8') et du commutateur (13'), apte à activer le circuit de temporisation (8') et le commutateur (13') en cas de détection de coïncidence entre les contenus des deux registres parallèle-parallèle (14 et 15).

**Claims**

1. A device for switching data transmission channels, said device being interposed between a receiver unit and two data transmission channels (3 and 4), each channel transmitting under different conditions of propagation the data delivered by a common transmitter unit as well as the clock signal associated with said data, the device comprising first means (9 and 11) for increasing by a factor n the duration of the data transmitted over the two transmission channels, and second switching means (8) for transmitting the data received from one or the other of the two channels to the receiver unit, characterized in that it further comprises third means (13, 17) for delivering a clock signal to the receiver unit, this signal being in phase with the clock signal of the switched channel, fourth means (18) coupled to the first means (9, 11), conceived to synchronize the data of the two channels, the durations of which are increased by the first means, and fifth means (16) coupled to the receiver unit and intended to shorten by the same factor n the duration of the data furnished by the first means and to transmit these data thus obtained to the receiver unit synchroneously with the clock signals delivered by the third means (13, 17), the second switching means (8) being interposed between the first means (9, 11) and the fifth means (16) in order to transmit the data which have been synchronized by the fourth means (18) through the fifth means to the receiver unit, the increased duration of the data furnished by the first means (9, 11) being larger than two times the maximum difference of propagation between the two channels.

2. A device according to claim 1, characterized in that the first means (9) for increasing the duration of the data transmitted on the first transmission channel by a factor n consist of a first series-parallel converter (20 and 21), a series input of which is connected to the first transmission channel and n parallel outputs of which are connected to the first inputs of n switches (8).

3. A device according to claims 1 and 2, characterized in that the first means (11) for increasing the duration of the data transmitted on the second transmission channel by a factor n consist of a second series-parallel converter (22 and 23), a series input of which is connected to the second transmission channel and n parallel outputs of which are connected to the second inputs of the n switches (8).

4. A device according to claims 1, 2 and 3, characterized in that the fifth means (16) for shortening the duration of the data transmitted to the receiver unit consist of a parallel-series converter (28 and 29), the n parallel inputs of which are connected to the outputs of the n switches and the series output of which is connected to the receiver unit.

5. A device according to claims 1 to 4, characterized in that the third means (13, 17) intended to deliver a clock signal to the receiver unit which is in phase with the clock signal of the switched channels are constituted by a phase-locked loop (24, 25, 26, 27), the input of which is connected to the output of a clock signal switch (13'), the inputs of the clock signal switch (13') being connected to a pulse divider (10, 12), which divides by n the clock signal pulses of each one of the channels.

6. A device according to any one of claims 1 to 5, characterized in that it comprises a delay circuit (8') for delaying the switching of the data by the second switch means (8) for a time delay which is necessary to get in phase the clock signal delivered by the phase-locked loop with the clock signal of the switched channels.

7. A device according to any one of claims 1 to 6, characterized in that it comprises seventh means (14, 15) intended to take into account the data with increased duration due to the first means (9, 11) in synchronism with the clock signal generated by the phase-locked loop (13).

8. A device according to claim 7, characterized in that the seventh means (14 and 15) for taking into account the fictitious data which have been increased in duration by the first means (9, 11) in synchronism with the clock signal furnished by the phase-locked loop (3) consist of two parallel-parallel registers (14 and 15) of n binary elements, these registers being interposed between the two series-parallel converters (9 and 11) and the n switches (8) and being provided with clock inputs connected to the output of the means (13) for getting the clock signals in phase.

9. A device according to claim 8, characterized in that the fourth means (18) for getting the fictitious data in synchronism comprise a control circuit for shifting the data stored in the series-parallel converter associated to the old channel in the event of detection of non-coincidence between the contents of the two parallel-parallel registers (14 and 15), and a circuit for controlling the delay circuit (8) and the switch (13'), capable of activating the delay circuit (8') and the switch (13') in the event of detection of coincidence between the contents of the two parallel-parallel registers (14 and 15).

**Patentansprüche**

1. Vorrichtung zur Umschaltung von Datenübertragungskanälen, die zwischen einem Empfangsgerät und zwei Datenübertragungskanälen (3 und 4) liegen, welche je gemäss unterschiedlichen Übertragungsbedingungen die von einem gemeinsamen Sendegerät ausgesandten Daten und ein diesen Daten zugeordnetes Taktsignal übertragen, wobei die Vorrichtung erste Mittel (9 und 11) zur Verlängerung der Dauer der auf den beiden Übertragungskanälen übertragenen Daten um einen Faktor n und zweite Umschaltmittel (8) aufweist, um die auf dem einen oder den anderen der beiden Kanäle empfangenen Daten an ein Empfangsgerät zu übertragen, dadurch gekennzeichnet, dass sie ausserdem dritte Mittel (13, 17) zur Lieferung eines Taktsignals in Phase mit dem Taktsignal des durchgeschalteten Kanals an das Empfangsgerät, vierte Mittel (18), die mit den ersten Mitteln (9, 11) gekoppelt sind, um die Daten der beiden Kanäle, deren Dauer durch die ersten Mittel verlängert worden ist, zu synchronisieren, und fünfte Mittel (16) aufweist, die mit dem Empfangsgerät gekoppelt sind, um um denselben Faktor n die Dauer der von den ersten Mitteln gelieferten Daten zu verkürzen und die so erhaltenen Daten an das Empfangsgerät synchron mit den von den dritten Mitteln (13, 17) gelieferten Taktsignalen zu übertragen, wobei die zweiten Umschaltmittel (8) zwischen den ersten Mitteln (9, 11) und den fünften Mitteln (16) eingefügt sind, um die von den vierten Mitteln (18) synchronisierten Daten über die fünften Mittel zum Empfangsgerät zu übertragen, und die verlängerte Dauer der von den ersten Mitteln (9, 11) gelieferten Daten grösser als die doppelte maximale Differenz der Fortpflanzungszeiten zwischen den beiden Kanälen gewählt ist.

2. Vorrichtung nach Anspruch 1, dadurch gekennzeichnet, dass die ersten Mittel (9) zur Verlängerung der Dauer der auf dem ersten Übertragungskanal übertragenen Daten um den Faktor n aus einem ersten Serien-Parallel-Wandler (20, 21) bestehen, dessen Serieneingang an den ersten Übertragungskanal angeschlossen ist und dessen n parallele Ausgänge an die ersten Eingänge von n Umschaltern (8) angeschlossen sind.

3. Vorrichtung nach den Ansprüchen 1 und 2, dadurch gekennzeichnet, dass die ersten Mittel (11) zur Verlängerung der Dauer der auf dem zweiten Übertragungskanal übertragenen Daten um den Faktor n aus einem zweiten Serien-Parallel-Wandler (22 und 23) bestehen, dessen Serieneingang an den zweiten Übertragungskanal und dessen n parallele Ausgänge an die zweiten Eingänge der n Umschalter (8) angeschlossen sind.

4. Vorrichtung nach den Ansprüchen 1, 2 und 3, dadurch gekennzeichnet, dass die fünften Mittel (16) zur Verkürzung der Dauer der zum Empfangsgerät übertragenen Daten aus einem Parallel-Serien-Wandler (28 und 29) bestehen, dessen n parallele Eingänge an die Ausgänge der n Umschalter angeschlossen sind, während sein Serienausgang mit dem Empfangsgerät verbunden ist.

5. Vorrichtung nach einem der Ansprüche 1 bis 4, dadurch gekennzeichnet, dass die dritten Mittel (13, 17) zur Lieferung eines Taktsignals an das Empfangsgerät in Phase mit dem Taktsignal des durchgeschalteten Kanals aus einer Phasenregelschleife (24, 25, 26, 27) bestehen, deren Eingang mit dem Ausgang eines Taktsignalumschalters (13') verbunden ist, während die Eingänge des Taktsignalumschalters (13') an einen Teiler durch n (10, 12) für die Impulse des Taktsignals je eines der Kanäle angeschlossen sind.

6. Vorrichtung nach einem beliebigen der Ansprüche 1 bis 5, dadurch gekennzeichnet, dass sie einen Zeitverzögerungsschaltkreis (8') aufweist, um die von den zweiten Umschaltmitteln (8) bewirkte Datenumschaltung um die Zeitdauer zu verzögern, die für die Phasenanpassung des von der Phasenregelschleife gelieferten Taktsignals an das Taktsignal des durchgeschalteten Kanals benötigt wird.

7. Vorrichtung nach einem beliebigen der Ansprüche 1 bis 6, dadurch gekennzeichnet, dass sie siebte Mittel (14, 15) aufweist, um die von den ersten Mitteln (9, 11) in ihrer Dauer vergrösserten Daten im Takt mit den von der Phasenregelschleife (13) gebildeten Taktsignal zu bearbeiten.

8. Vorrichtung nach Anspruch 7, dadurch gekennzeichnet, dass die siebten Mittel (14 und 15) zur Bearbeitung der fiktiven von den ersten Mitteln (9, 11) in ihrer Dauer verlängerten Daten gemäss dem von der Phasenregelschleife (3) gelieferten Taktsignal aus zwei Parallel-Parallel-Registern (14 und 15) mit n Binärelementen bestehen, die zwischen die beiden Serien-Parallel-Wandler (9 und 11) und die n Umschalter (8) eingefügt sind und deren Takteingänge an den Ausgang der Mittel (13) zur Phasenanpassung der Taktsignale angeschlossen sind.

9. Vorrichtung nach Anspruch 8, dadurch gekennzeichnet, dass die vierten Mittel (18) zur Synchronisierung der fiktiven Daten einen Steuerkreis für die Verschiebung der im Serien-Parallel-Wandler, der dem alten Kanal zugeordnet ist, gespeicherten Daten bei Erkennung einer Nicht-Koinzidenz zwischen den Inhalten der beiden Parallel-Parallel-Register (14 und 15), und einen Schaltkreis enthalten, mit dem der Verzögerungsschaltkreis (8') und der Umschalter (13') gesteuert wird und der in der Lage ist, den Verzögerungsschaltkreis (8') und den Umschalter (13') zu aktivieren, wenn eine Koinzidenz zwischen den Inhalten der beiden Parallel-Parallel-Register (14 und 15) festgestellt wird.

Fig.1

0 060 751

Fig.2

0 060 751